# FASCICULE DE BREVET EUROPEEN

(11) **EP 1 853 145 B1**
(45) Date de publication et mention de la délivrance du brevet: **04.11.2009**
(21) Numéro de dépôt: 06709333.6
(22) Date de dépôt: 16.02.2006
(51) Int. Cl.: A47J 43/07

(54) **DISPOSITIF DE SECURITE POUR ACCESSOIRE DE PREPARATION CULINAIRE A OUTIL ROTATIF**
SICHERHEITSVORRICHTUNG FÜR EIN KOCHUTENSIL MIT EINEM DREHWERKZEUG
SAFETY DEVICE FOR A COOKING UTENSIL COMPRISING A ROTARY TOOL

(30) Priorité: 01.03.2005 FR 0502059
(43) Date de publication de la demande: 14.11.2007
(73) Titulaire: SEB S.A., 69130 Ecully (FR)
(72) Inventeur: DAVID, Laurent, F-65000 Tarbes (FR); DURRIS, Cyril, F-65690 Montignac (FR)
(74) Mandataire: Kiehl, Hubert
(86) Numéro de dépôt international: PCT/FR2006/000359
(87) Numéro de publication internationale: WO 2006/092477

(56) Documents cités:
- FR-A- 2 729 588
- FR-A- 2 786 383

## Description

La présente invention se rapporte au domaine technique général des appareils électroménagers de préparation culinaire. La présente invention concerne plus particulièrement les accessoires de préparation culinaire comportant un outil rotatif agencé dans un récipient de travail, prévu pour être utilisés avec un boîtier moteur comportant un axe entraîneur. La présente invention concerne également les appareils électroménagers de préparation culinaire comportant un accessoire du type précité.

Il est connu du document FR 2 729 588 un appareil électroménager de préparation culinaire comportant un récipient de travail dans lequel est agencé un outil rotatif, un couvercle amovible de sécurité, et un boîtier moteur disposé sur le couvercle amovible de sécurité. Le couvercle amovible de sécurité présente des portions déformables prévues pour coopérer avec le récipient de travail. Les portions déformables sont formées par des portions d'un rebord périphérique du couvercle amovible de sécurité. En l'absence du récipient de travail, le couvercle amovible de sécurité occupe une configuration de sécurité dans laquelle le boîtier moteur ne peut entraîner l'outil rotatif. En présence du récipient de travail, le couvercle amovible de sécurité présente une configuration active dans laquelle le boîtier moteur peut entraîner l'outil rotatif. Un inconvénient de cette réalisation est que l'élasticité des portions mobiles du couvercle peut s'altérer avec le temps et compromettre le bon fonctionnement du dispositif de sécurité. Un autre inconvénient de cette réalisation est que l'utilisateur peut chercher à amener le couvercle mobile de sécurité en configuration active en déformant les portions déformables.

Un objet de la présente invention est d'améliorer la sécurité d'un accessoire de préparation culinaire du type précité.

Un autre objet de la présente invention est d'améliorer la sécurité d'un appareil électroménager de préparation culinaire comportant un accessoire de préparation culinaire du type précité.

Ces objets sont atteints avec un accessoire de préparation culinaire prévu pour être utilisé avec un boîtier moteur comportant un axe entraîneur, ledit accessoire de préparation culinaire comportant un récipient de travail, un outil rotatif prévu pour tourner dans le récipient de travail, et un couvercle comportant un organe de détection mobile entre une position de repos occupée en l'absence du récipient de travail et une position active lorsque le couvercle est en place sur le récipient de travail, et un organe de protection mobile entre une position de repos dans laquelle l'outil rotatif ne peut être entraîné et une position active dans laquelle l'outil rotatif peut être entraîné, l'organe de détection en position de repos contribuant au maintien de l'organe de protection en position de repos, du fait que l'organe de détection et l'organe de protection sont logés au moins partiellement dans le couvercle. Cette disposition permet d'éviter de laisser trop apparent le dispositif de sécurité prévu pour éviter l'entraînement en rotation de l'outil rotatif en l'absence du récipient de travail. Un dispositif de sécurité trop apparent et trop accessible peut inciter l'utilisateur à déplacer l'organe de détection ou l'organe de protection en position active. L'organe de détection peut coopérer avec l'organe de protection par l'intermédiaire d'un mécanisme.

Selon une forme de réalisation avantageuse, le couvercle forme un corps creux. Ainsi l'organe de détection et l'organe de protection peuvent être logés au moins partiellement à l'intérieur du corps creux.

Avantageusement, le couvercle comporte une paroi de protection formant une protection latérale pour une tête de détection de l'organe de détection. La tête de détection est prévue pour coopérer avec le récipient de travail.

Avantageusement le couvercle comporte au moins un ergot latéral prévu pour être engagé dans une rainure intérieure du récipient de travail, pour permettre le verrouillage du couvercle sur le récipient de travail. D'autres moyens de verrouillage peuvent également être envisagés.

Avantageusement alors la rainure intérieure présente une ouverture supérieure et une encoche latérale.

Avantageusement encore l'organe de détection est monté mobile contre un moyen de rappel.

Avantageusement encore l'organe de protection est monté mobile contre un autre moyen de rappel.

Selon une forme de réalisation le couvercle comporte un mécanisme de transmission comprenant une tête d'entraînement prévue pour coopérer avec ledit axe entraîneur dudit boîtier moteur et une sortie d'entraînement prévue pour coopérer avec l'outil rotatif. De manière préférée alors, la sortie d'entraînement est différente de l'axe entraîneur, pour éviter le montage de l'outil rotatif sur l'axe entraîneur. En alternative, l'axe entraîneur du boîtier moteur peut être prévu pour coopérer directement avec l'outil rotatif. Le boîtier moteur peut notamment comporter un interrupteur de sécurité susceptible d'être actionné par le couvercle.

Avantageusement alors le mécanisme de transmission comprend un réducteur agencé entre la tête d'entraînement et la sortie d'entraînement. Cette disposition est particulièrement intéressante avec les boîtiers moteur appartenant à des appareils du type pied mixer, dans lesquels la vitesse de rotation du moteur est élevée.

Selon un mode de réalisation l'organe de protection forme un volet apte à obturer au moins partiellement une ouverture du couvercle prévue pour l'introduction de l'outil de travail ou de l'axe entraîneur lorsque l'organe de détection occupe la position de repos.

Selon un autre mode de réalisation, l'organe de protection est susceptible de débrayer un élément de transmission du mécanisme de transmission lorsque l'organe de détection occupe la position de repos.

Selon un autre mode de réalisation l'organe de protection est susceptible de bloquer la rotation d'un élément de transmission du mécanisme de transmission lorsque l'organe de détection occupe la position de repos.

Les objets de la présente invention sont atteints aussi avec un appareil électroménager de préparation culinaire comprenant un boîtier moteur comportant un axe entraîneur, et un accessoire de préparation culinaire comportant un récipient de travail, un outil rotatif prévu pour tourner dans le récipient de travail, et un couvercle comportant un organe de détection mobile entre une position de repos occupée en l'absence du récipient de travail et une position active lorsque le couvercle est en place sur le récipient de travail, et un organe de protection mobile entre une position de repos dans laquelle l'outil rotatif ne peut être entraîné et une position active dans laquelle l'outil rotatif peut être entraîné, l'organe de détection en position de repos contribuant au maintien de l'organe de protection en position de repos, du fait que l'accessoire de préparation culinaire est conforme à l'une au moins des caractéristiques précitées.

Alors selon un mode de réalisation, le couvercle comporte un mécanisme de transmission comprenant une tête d'entraînement prévue pour coopérer avec l'axe entraîneur et une sortie d'entraînement prévue pour coopérer avec l'outil rotatif, l'organe de protection en position de repos occupant une position sortie prévue pour empêcher l'accouplement de l'axe entraîneur avec la tête d'entraînement.

Avantageusement alors, l'organe de protection présente une tête de commande prévue pour coopérer avec le boîtier.

Avantageusement alors la tête de commande est agencée entre une paroi tubulaire entourant la tête d'entraînement et une paroi périphérique.

Avantageusement alors une butée est agencée entre la paroi tubulaire et la paroi périphérique. Le boîtier moteur peut ainsi occuper une position stable sur le couvercle.

Avantageusement encore l'organe de détection comporte un corps formant une butée d'arrêt pour l'organe de protection lorsque l'organe de détection occupe la position de repos.

L'invention sera mieux comprise à l'étude des quatre exemples de réalisation suivants et d'une variante, pris à titre nullement limitatif, illustrés dans les figures annexées, dans lesquelles :
- la figure 1 est une vue en perspective d'un boîtier moteur d'appareil électroménager de préparation culinaire et d'un accessoire de préparation culinaire prévu pour être utilisé avec ledit boîtier moteur,
- la figure 2 est une vue en perspective éclatée de l'accessoire de préparation culinaire illustré à la figure 1,
- la figure 3 est une vue en perspective en coupe partielle d'une partie de l'accessoire de préparation culinaire illustré aux figures 1 et 2,
- la figure 4 est une vue en perspective en coupe partielle de l'accessoire de préparation culinaire illustré aux figures 1 à 3.
- la figure 5 est une vue schématique illustrant un mode de réalisation d'un couvercle comportant un volet d'obturation occupant une position obturée interdisant le fonctionnement de l'appareil,
- la figure 6 est une vue schématique du couvercle illustré à la figure 5, le volet d'obturation occupant une position effacée autorisant le fonctionnement de l'appareil,
- la figure 7 est une vue schématique illustrant un mode de réalisation d'un couvercle dans lequel un mécanisme de transmission présente un élément en position débrayée interdisant le fonctionnement de l'appareil,
- la figure 8 est une vue schématique du couvercle illustré à la figure 7, le mécanisme de transmission occupant une position embrayée autorisant le fonctionnement de l'appareil,
- la figure 9 est une vue schématique illustrant un mode de réalisation d'un couvercle dans lequel un élément de blocage en position active interdit le fonctionnement de l'appareil,
- la figure 10 est une vue schématique du couvercle illustré à la figure 9, l'élément de blocage en position effacée autorisant le fonctionnement de l'appareil,
- la figure 11 est une vue schématique d'une variante dans laquelle le boîtier moteur comporte un interrupteur de sécurité commandé par le couvercle.

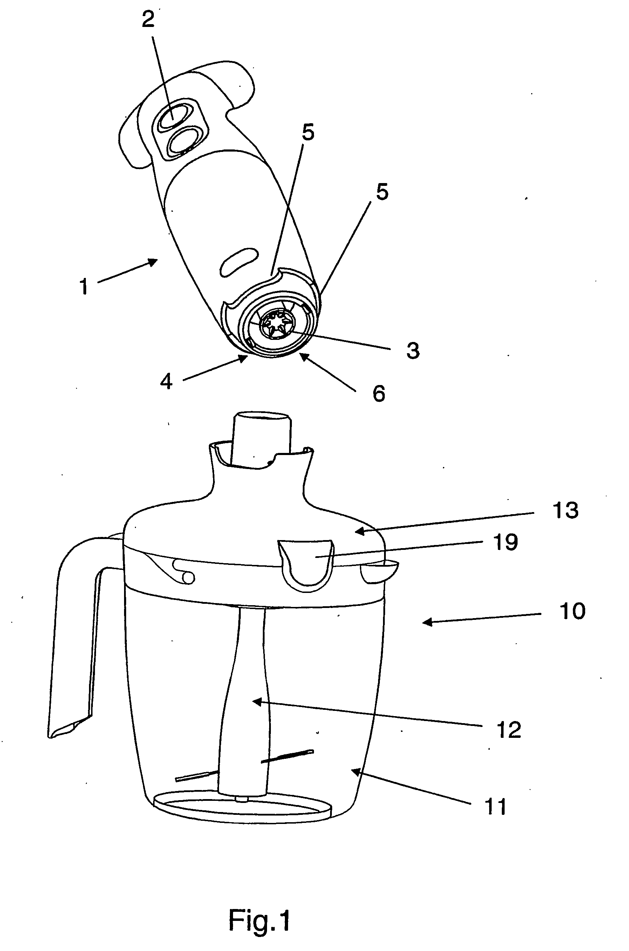

La figure 1 illustre un boîtier moteur 1 prévu pour être utilisé avec un accessoire de préparation culinaire 10.

Le boîtier moteur 1 comporte un bouton de commande 2 prévu pour commander un moteur entraînant un axe entraîneur 3. Le boîtier moteur 1 peut notamment appartenir à un appareil électroménager de préparation culinaire du type pied mixer. Le boîtier moteur 1 présente une extrémité 4 présentant deux protubérances 5 agencées au-dessus d'une extrémité inférieure 6. L'extrémité inférieure 6 forme une paroi annulaire logeant l'axe entraîneur 3.

L'accessoire de préparation culinaire 10 comporte un récipient de travail 11, un outil rotatif 12 prévu pour tourner dans le récipient de travail 11, et un couvercle 13 prévu pour fermer le récipient de travail 11.

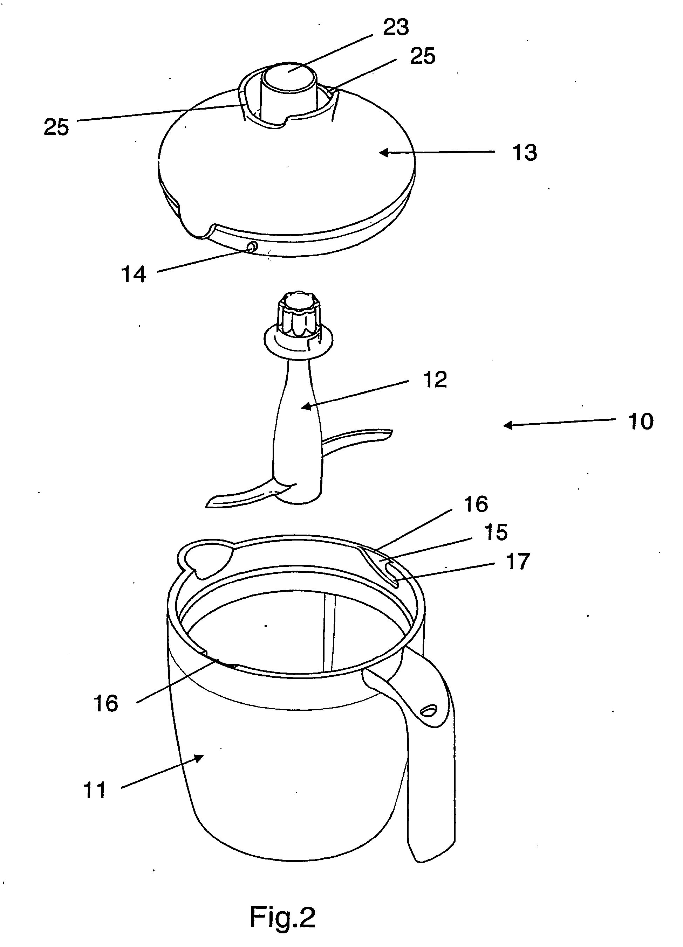

A cet effet, tel que mieux visible sur la figure 2, le couvercle 13 comporte deux ergots 14 prévus pour être engagés dans des rainures intérieures 15 ménagées sur la face interne du récipient de travail 11. Chacune des rainures intérieures 15 présente une ouverture supérieure 16 et une encoche latérale 17. Les ouvertures supérieures 17 débouchent sur la face supérieure du récipient de travail 11.

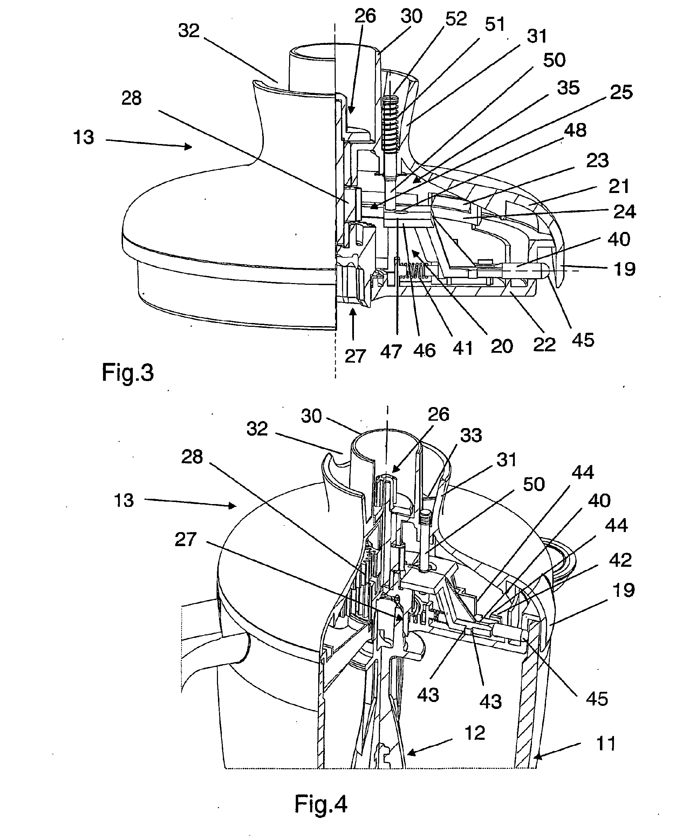

La figure 3 illustre le couvercle 13 en l'absence du récipient de travail 11. Le couvercle 13 forme un corps creux 20. A cet effet le couvercle 13 comprend une demi coque supérieure 21 assemblée avec une demi coque inférieure 22. Tel que représenté à la figure 3, la demi coque inférieure 22 comporte au moins un crochet élastique 23 engagé avec une butée 24 appartenant à la demi coque supérieure 21.

Le couvercle 13 comporte un mécanisme de transmission 25 comprenant une tête d'entraînement 26 prévue pour coopérer avec l'axe entraîneur 3 du boîtier moteur 1 et une sortie d'entraînement 27 prévue pour coopérer avec l'outil rotatif 12. Le mécanisme de transmission 25 comprend avantageusement un réducteur 28 agencé entre la tête d'entraînement 26 et la sortie d'entraînement 27.

La tête d'entraînement 26 est prévue pour coopérer avec l'axe entraîneur 3. La tête d'entraînement 26 est entourée par une paroi tubulaire 30. La paroi tubulaire 30 est entourée par une paroi périphérique 31 comportant deux échancrures supérieures 32, mieux visibles sur la figure 3. Les échancrures 32 supérieures sont prévues pour loger les protubérances 5 du boîtier moteur 1. Ainsi le couvercle 13 et le boîtier moteur 1 comportent des moyens de blocage en rotation, formés par les protubérances engagées dans les échancrures 32. La sortie d'entraînement 27 est prévue pour entraîner l'outil rotatif 12. L'outil rotatif 12 ne peut être entraîné directement par l'axe entraîneur 3.

Le couvercle 13 comporte un dispositif de sécurité 35 prévu pour éviter l'entraînement en rotation de l'outil rotatif 12 en l'absence du récipient de travail 11.

Le dispositif de sécurité 35 comporte un organe de détection 40 mobile entre une position de repos occupée en l'absence du récipient de travail 11, représentée à la figure 3, et une position active lorsque le couvercle 13 est en place sur le récipient de travail 11, représentée à la figure 4. L'organe de détection 40 est monté contre un moyen de rappel 41. L'organe de détection 40 est monté coulissant entre des parois de guidage 42. L'organe de détection 40 est monté mobile radialement. La course de l'organe de détection 40 est limitée par des butées 43 prévues pour coopérer avec des parois d'arrêt 44. L'organe de détection 40 comporte une tête de détection 45 prévue pour coopérer avec le récipient de travail 11. L'organe de détection 40 est logé au moins partiellement dans le couvercle 13. La tête de détection 45 est agencée derrière une paroi de protection 19 du couvercle 13. Tel que montré à la figure 4, le récipient de travail 11 est engagé entre la tête de détection 45 et la paroi de protection 19 lorsque le couvercle 13 est en place sur le récipient de travail 11. La paroi de protection 19 appartient à la demi coque supérieure 21.

Le dispositif de sécurité 35 comporte un organe de protection 50 mobile entre une position de repos, représentée à la figure 3 et une position active, représentée à la figure 4. L'organe de protection 50 est monté contre un autre moyen de rappel 51. L'organe de protection 50 comporte une tête de commande 52 prévue pour être repoussée par le boîtier moteur 1. L'organe de protection 50 est logé au moins partiellement dans le couvercle 13. Plus particulièrement, la tête de commande 52 est prévue pour être repoussée par l'extrémité inférieure 6. Une paroi 33 est agencée entre la paroi tubulaire 30 et la paroi périphérique 31. Plus particulièrement la paroi 33 est agencée à proximité de la tête de commande. La paroi 33 forme une butée prévue pour coopérer avec le boîtier moteur 1. Si désiré la tête de commande 52 peut être agencée entre la paroi 33 et une autre paroi reliant la paroi tubulaire 30 à la paroi périphérique 31.

L'organe de détection 40 comporte un corps 46 formant une butée d'arrêt 47 pour l'organe de protection 50 lorsque l'organe de détection 40 occupe la position de repos. Ainsi l'organe de détection 40 en position de repos contribue au maintien de l'organe de protection 50 en position de repos.

Lorsque l'organe de détection 40 atteint la position active, la butée d'arrêt 47 est dégagée de la trajectoire de l'organe de protection 50, et l'organe de protection 50 peut atteindre la position active. A cet effet le corps 46 présente une ouverture 48 prévue pour le passage de l'organe de protection 50.

La présente réalisation fonctionne de la manière suivante.

En l'absence du récipient de travail 11, l'organe de détection 40 occupe la position de repos illustrée à la figure 3, dans laquelle la tête de détection 45 est sortie du couvercle 13. Toutefois la paroi de protection 19 empêche l'utilisateur d'accéder à la tête de détection 45.

L'organe de protection 50 occupe la position de repos, ou position sortie. Si l'utilisateur essaie de mettre en place le boîtier moteur 1 sur le couvercle 13, l'extrémité inférieure 6 s'engage autour de la paroi tubulaire 30 et vient repousser la tête de commande 52. Toutefois le déplacement de l'organe de protection 50 est arrêté par la butée d'arrêt 47 de l'organe de détection 40, de sorte que l'axe entraîneur 3 ne peut attendre la tête d'entraînement 26. Ainsi l'outil rotatif 12 monté sur la sortie d'entraînement 27 ne peut tourner.

Lorsque le couvercle 13 est disposé sur le récipient de travail 11, l'organe de détection 40 atteint la position active illustrée à la figure 4, dans laquelle la tête de détection 45 est repoussée dans le couvercle 13 par le récipient de travail 11.

L'organe de protection 50 occupe la position active, ou position rentrée. Si l'utilisateur essaie de mettre en place le boîtier moteur 1 sur le couvercle 13, l'extrémité inférieure 6 du boîtier moteur 1 s'engage autour de la paroi tubulaire 30 et vient repousser la tête de commande 52. La présence de l'ouverture 48 sur la trajectoire de l'organe de protection 50 permet le déplacement de l'organe de protection 50 vers la position active. La tête de commande 52 est alors repoussée dans le couvercle 13 et l'axe entraîneur 3 peut atteindre la tête d'entraînement 26. Le boîtier moteur 1 peut alors entraîner en rotation l'outil rotatif 12 présent dans le récipient de travail 11.

Grâce au dispositif de sécurité 35, l'accessoire et l'appareil selon l'invention sont particulièrement sûrs.

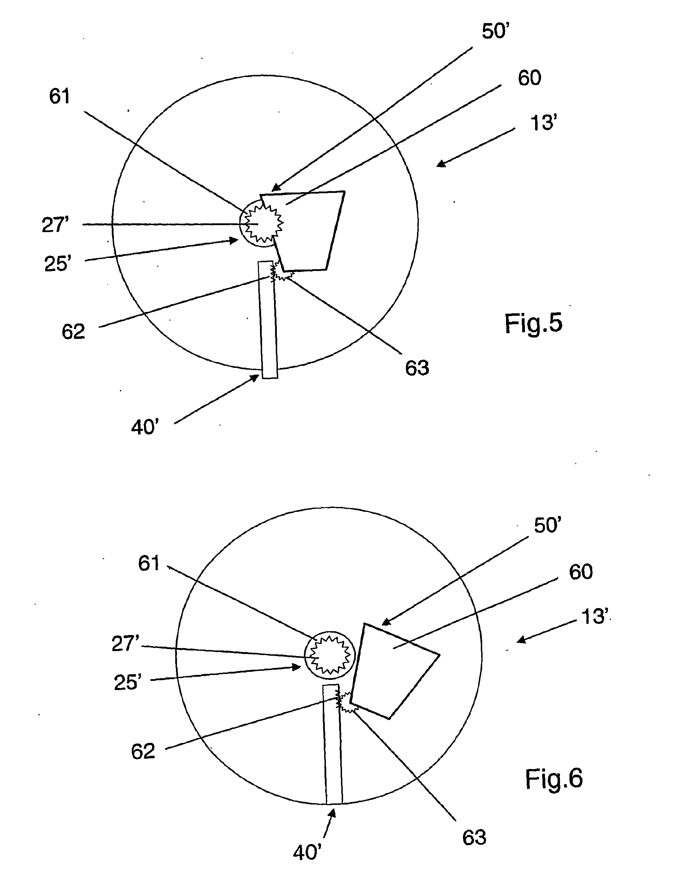

Un autre mode de réalisation est illustré de manière schématique aux figures 5 et 6. Ce mode de réalisation diffère du mode de réalisation précédent illustré aux figures 1 à 4 en ce que le couvercle 13' comporte un organe de détection 40' coopérant avec un organe de protection 50' formant un volet 60 apte à obturer au moins partiellement une ouverture 61 du couvercle 13' en l'absence du récipient de travail 11 (non représenté aux figures 5 et 6), lorsque l'organe de détection 40' occupe une position de repos. L'organe de détection 40' en position de repos contribue au maintien de l'organe de protection 50' en position de repos. L'ouverture 61 est prévue pour l'introduction de l'outil de travail 12 (non représenté aux figures 5 et 6) lorsque l'organe de détection 40' atteint une position active. L'organe de détection 40' et l'organe de protection 50' sont logés au moins partiellement dans le couvercle 13'.

Plus particulièrement, l'organe de détection 40' est monté mobile radialement contre un moyen de rappel, non représenté sur les figures 5 et 6, et comporte un secteur denté 62 prévu pour entraîner une roue dentée 63 portant le volet 60. Le couvercle 13' comporte un mécanisme de transmission 25' comprenant une tête d'entraînement (non représentée sur les figures 5 et 6) et une sortie d'entraînement 27'. Le volet 60 est prévu pour s'intercaler entre le couvercle 13' et la sortie d'entraînement 27'. Le couvercle 13' forme un corps creux.

Ce mode de réalisation fonctionne de la manière suivante. Lorsque le récipient de travail est absent, l'organe de détection 40' occupe la position de repos illustrée à la figure 5. L'organe de protection 50' occupe une position de repos, ou position d'obturation. L'outil rotatif 12 (non représenté sur la figure 5) ne peut être entraîné par la sortie d'entraînement 27' du fait de la présence du volet 60 entre la sortie d'entraînement 27' et l'ouverture 61. Lorsque le couvercle 13' est en place sur le récipient de travail 11 (non représenté sur la figure 6), l'organe de détection 40' repoussé par le récipient de travail atteint la position active. L'organe de protection 50' atteint une position active, ou position effacée. Le déplacement du secteur denté 62 entraîne le pivotement de la roue dentée 63 portant le volet 60. L'ouverture 61 est dégagée. L'outil rotatif 12 (non représenté sur la figure 6) peut être entraîné par la sortie d'entraînement 27'.

A titre de variante, l'ouverture 61 du couvercle 13' peut être prévue pour l'introduction de l'axe entraîneur 3 lorsque l'organe de détection 40' a atteint la position active, l'organe de protection 50' formant un volet apte à obturer au moins partiellement l'ouverture 61 lorsque l'organe de détection 40' occupe la position de repos.

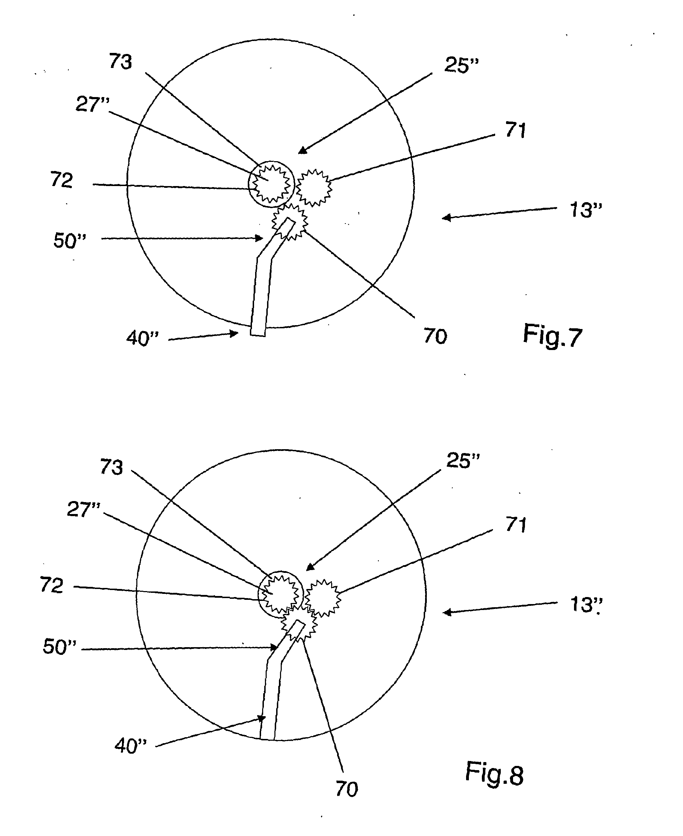

Un autre mode de réalisation est illustré de manière schématique aux figures 7 et 8. Ce mode de réalisation diffère du mode de réalisation précédent en ce que le couvercle 13" comporte un organe de détection 40" coopérant avec un organe de protection 50" susceptible de débrayer un élément de transmission 70 du mécanisme de transmission 25", pour débrayer la transmission en l'absence du récipient de travail 11 (non représenté aux figures 7 et 8), lorsque l'organe de détection 40" occupe une position de repos. L'organe de détection 40" en position de repos contribue au maintien de l'organe de protection 50" en position de repos. L'organe de détection 40" et l'organe de protection 50" sont logés au moins partiellement dans le couvercle 13".

Plus particulièrement, l'organe de détection 40" est monté mobile radialement contre un moyen de rappel, non représenté sur les figures 7 et 8, et est prolongé par l'organe de protection 50" portant l'élément de transmission 70 prévu pour coopérer avec deux autres éléments de transmission 71, 72 reliés respectivement à la tête d'entraînement (non représentée aux figures 5 et 6) et à la sortie d'entraînement 27" agencée face à une ouverture 73 du couvercle 13". Le couvercle 13" forme un corps creux.

Ce mode de réalisation fonctionne de la manière suivante. Lorsque le récipient de travail est absent, l'organe de détection 40" occupe la position de repos illustrée à la figure 7. L'organe de protection 50" occupe une position de repos, ou position débrayée. L'outil rotatif 12 (non représenté sur la figure 7) ne peut être entraîné par la sortie d'entraînement 27" du fait de la rupture de la transmission entre l'élément de transmission 71 et l'élément de transmission 70 d'une part et l'élément de transmission 70 et l'élément de transmission 72 d'autre part. Lorsque le couvercle 13" est en place sur le récipient de travail 11 (non représenté sur la figure 8), l'organe de détection 40" repoussé par le récipient de travail atteint une position active et entraîne l'embrayage de l'élément de transmission 70 avec les éléments de transmission 71, 72. L'organe de protection 50" atteint une position active, ou position embrayée. L'outil rotatif 12 (non représenté sur la figure 8) peut être entraîné par la sortie d'entraînement 27".

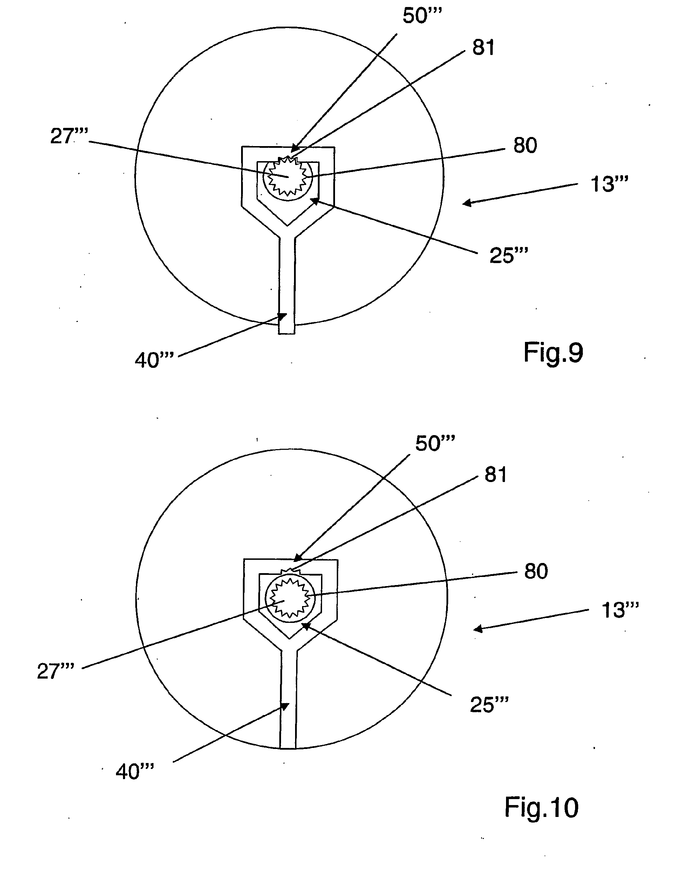

Un autre mode de réalisation est illustré de manière schématique aux figures 9 et 10. Ce mode de réalisation diffère du mode de réalisation précédent en ce que le couvercle 13"' comporte un organe de détection 40"' coopérant avec un organe de protection 50"' susceptible de bloquer la rotation d'un élément de transmission 80 du mécanisme de transmission 25"' en l'absence du récipient de travail 11 (non représenté aux figures 7 et 8), lorsque l'organe de détection 40"' occupe une position de repos. L'organe de détection 40"' en position de repos contribue au maintien de l'organe de protection 50"' en position de repos. L'organe de détection 40"' et l'organe de protection 50"" sont logés au moins partiellement dans le couvercle 13"'.

Plus particulièrement, l'organe de détection 40"' est monté mobile radialement contre un moyen de rappel, non représenté sur les figures 9 et 10, et est prolongé par l'organe de protection 50"' portant une conformation de blocage 81 susceptible de bloquer la rotation de l'élément de transmission 80. L'élément de transmission 80 est par exemple relié à la sortie d'entraînement 27"'. Le couvercle 13"' forme un corps creux.

Ce mode de réalisation fonctionne de la manière suivante. Lorsque le récipient de travail est absent, l'organe de détection 40"' occupe la position de repos illustrée à la figure 9. L'organe de protection 50"' occupe une position de repos, ou position de blocage. L'outil rotatif 12 (non représenté sur la figure 9) ne peut être entraîné par la sortie d'entraînement 27"' du fait du blocage du mécanisme de transmission 25"'. Lorsque le couvercle 13"' est en place sur le récipient de travail 11 (non représenté sur la figure 10), l'organe de détection 40"' repoussé par le récipient de travail atteint une position active et libère l'élément de transmission 80. L'organe de protection 50"' atteint une position active, ou position retirée. L'outil rotatif 12 (non représenté sur la figure 10) peut être entraîné par la sortie d'entraînement 27"'.

A titre de variante, l'organe de détention 40 ; 40' ; 40" ; 40"' n'est pas nécessairement monté mobile radialement.

A titre de variante, l'organe de détection 40; 40'; 40" ; 40"' peut coopérer avec l'organe de protection 50 ; 50' ; 50" ; 50"' par l'intermédiaire d'un mécanisme.

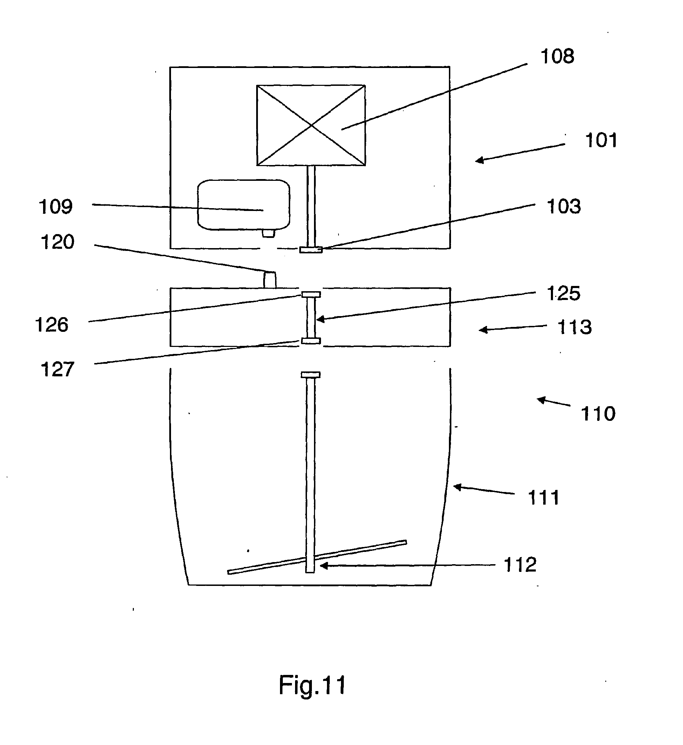

A titre de variante complémentaire illustrée à la figure 11, applicable aux différents exemples de réalisation précités, le couvercle 113 de l'accessoire de préparation culinaire 110 peut comporter un organe de commande 120 apte à coopérer avec un interrupteur de sécurité 109 agencé dans le boîtier moteur 101 lorsque le boîtier moteur 101 est en place sur le couvercle 113, afin d'autoriser le fonctionnement de l'appareil. Le boîtier moteur 101 comporte un moteur 108 entraînant un axe entraîneur 103.

Le couvercle 113 comporte un organe de détection, non représenté à la figure 11, atteignant une position active lorsque le couvercle 113 est en place sur le récipient de travail 111, et un organe de protection, non représentés à la figure 11, atteignant une position active dans laquelle l'outil de travail 112 peut être entraîné lorsque le couvercle 113 est en place sur le récipient de travail 111. L'organe de détection et l'organe de protection sont logés au moins partiellement dans le couvercle 113. L'organe de détection en position de repos contribue au maintien de l'organe de protection en position de repos. Le couvercle 113 comporte un mécanisme de transmission 125 comprenant une tête d'entraînement 126 prévue pour coopérer avec l'axe entraîneur 103 du boîtier moteur 101 et une sortie d'entraînement 127 prévue pour coopérer avec l'outil rotatif 112. Le couvercle 113 forme un corps creux.

De manière préférée, la sortie d'entraînement 27 ; 27' ; 27" ; 27"' ; 127 est différente de l'axe entraîneur 3 ; 103, pour éviter le montage de l'outil rotatif 12 ; 112 sur l'axe entraîneur 3 ; 103.

En alternative, le boîtier moteur 3 peut comporter un interrupteur de sécurité tel que l'interrupteur de sécurité 109 du boîtier moteur 103.

A titre de variante complémentaire, le mécanisme de transmission 25, 25', 25", 25"', 125 ne comprend pas nécessairement un réducteur.

A titre de variante complémentaire, le couvercle 13, 13', 113 ne comporte pas nécessairement un mécanisme de transmission.

La présente invention n'est nullement limitée aux exemples de réalisation décrits et à leurs variantes, mais englobe de nombreuses modifications dans le cadre des revendications.

## Revendications

1. Accessoire de préparation culinaire prévu pour être utilisé avec un boîtier moteur (1 ; 101) comportant un axe entraîneur (3 ; 103), ledit accessoire de préparation culinaire comportant un récipient de travail (11 ; 111), un outil rotatif (12 ; 112) prévu pour tourner dans le récipient de travail (11 ; 111), et , un couvercle (13; 13'; 13" ; 13"'; 113) comportant un organe de détection (40 ; 40' ; 40" ; 40"') mobile entre une position de repos occupée en l'absence du récipient de travail (11 ; 111) et une position active lorsque le couvercle (13 ; 13' ; 13" ; 13"' ; 113) est en place sur le récipient de travail (11 ; 111), et un organe de protection (50 ; 50' ; 50" ; 50"') mobile entre une position de repos dans laquelle l'outil rotatif (12 ; 112) ne peut être entraîné et une position active dans laquelle l'outil rotatif (12 ; 112) peut être entraîné, l'organe de détection (40 ; 40' ; 40" ; 40"') en position de repos contribuant au maintien de l'organe de protection (50 ; 50' ; 50" ; 50"') en position de repos, **caractérisé en ce que** l'organe de détection (40 ; 40' ; 40" ; 40"') et l'organe de protection (50 ; 50' ; 50" ; 50"') sont logés au moins partiellement dans le couvercle (13 ; 13' ; 13" ; 13"' ; 113).

2. Accessoire de préparation culinaire selon la revendication 1, **caractérisé en ce que** le couvercle (13 ; 13' ; 13" ; 13"' ; 113) forme un corps creux (20).

3. Accessoire de préparation culinaire selon l'une des revendications 1 ou 2, **caractérisé en ce que** le couvercle (13) comporte une paroi de protection (19) formant une protection latérale pour une tête de détection (45) de l'organe de détection (40).

4. Accessoire de préparation culinaire selon l'une des revendications 1 à 3, **caractérisé en ce que** le couvercle (13) comporte au moins un ergot latéral (14) prévu pour être engagé dans une rainure intérieure (15) du récipient de travail (11).

5. Accessoire de préparation culinaire selon la revendication 4, **caractérisés en ce que** la rainure intérieure (15) présente une ouverture supérieure (16) et une encoche latérale (17).

6. Accessoire de préparation culinaire selon l'une des revendications 1 à 5, **caractérisé en ce que** l'organe de détection (40) est monté mobile contre un moyen de rappel (41).

7. Accessoire de préparation culinaire selon l'une des revendications 1 à 6, **caractérisé en ce que** l'organe de protection (50) est monté mobile contre un autre moyen de rappel (51).

8. Accessoire de préparation culinaire selon l'une des revendications 1 à 7, **caractérisé en ce que** le couvercle (13 ; 13' ; 13" ; 13"' ; 113) comporte un mécanisme de transmission (25 ; 25' ; 25" ; 25"' ; 125) comprenant une tête d'entraînement (26 ; 126) prévue pour coopérer avec un axe entraîneur (3 ; 103) dudit boîtier moteur (1 ; 101) et une sortie d'entraînement (27 ; 27' ; 27" ; 27"' ; 127) prévue pour coopérer avec l'outil rotatif (12 ; 112).

9. Accessoire de préparation culinaire selon la revendication 8, **caractérisé en ce que** le mécanisme de transmission (25) comprend un réducteur (28) agencé entre la tête d'entraînement (26) et la sortie d'entraînement (27).

10. Accessoire de préparation culinaire selon l'une des revendications 1 à 9, **caractérisé en ce que** l'organe de protection (50') forme un volet (60) apte à obturer au moins partiellement une ouverture (61) du couvercle (13') prévue pour l'introduction de l'outil de travail (12) ou de l'axe entraîneur (3) lorsque l'organe de détection (40') atteint la position active.

11. Accessoire de préparation culinaire selon l'une des revendications 8 ou 9, **caractérisé en ce que** l'organe de protection (50") est susceptible de déplacer un élément de transmission (70) hors du mécanisme de transmission (25") lorsque l'organe de détection (40") occupe la position de repos.

12. Accessoire de préparation culinaire selon l'une des revendications 8 ou 9, **caractérisé en ce que** l'organe de protection (50"'.) est susceptible de bloquer la rotation d'un élément de transmission (80) du mécanisme de transmission (25"') lorsque l'organe de détection (40"') occupe la position de repos.

13. Appareil électroménager de préparation culinaire comprenant un boîtier moteur (1 ; 101) comportant un axe entraîneur (3 ; 103), et un accessoire de préparation culinaire (10 ; 110) comportant un récipient de travail (11 ; 111), un outil rotatif (12) prévu pour tourner dans le récipient de travail (11), et un couvercle (13) comportant un organe de détection (40 ; 40' ; 40" ; 40"') mobile entre une position de repos en l'absence du récipient de travail (11 ; 111) et une position active lorsque le couvercle (13 ; 13' ; 13" ; 13"' ; 113) est en place sur le récipient de travail (11 ; 111), et un organe de protection (50 ; 50' ; 50" ; 50"') mobile entre une position de repos dans laquelle l'outil rotatif (12 ; 112) ne peut être entraîné et une position active dans laquelle l'outil rotatif (12 ; 112) peut être entraîné, l'organe de détection (40 ; 40' ; 40" ; 40"') en position de repos contribuant au maintien de l'organe de protection (50 ; 50' ; 50" ; 50"') en position de repos, **caractérisé en ce que** l'accessoire de préparation culinaire est conforme à l'une des revendications 1 à 12.

14. appareil électroménager de préparation culinaire selon la revendication 13, **caractérisé en ce que** le couvercle (13) comporte un mécanisme de transmission (25) comprenant une tête d'entraînement (26) prévue pour coopérer avec l'axe entraîneur (3) et une sortie d'entraînement (27) prévue pour coopérer avec l'outil rotatif (12) et **en ce que** l'organe de protection (50) en position de repos occupe une position sortie prévue pour empêcher l'accouplement de l'axe entraîneur (3) avec la tête d'entraînement (26).

15. Appareil électroménager de préparation culinaire selon la revendication 14, **caractérisé en ce que** l'organe de protection (50) présente une tête de commande (52) prévue pour coopérer avec le boîtier (1).

16. Appareil électroménager de préparation culinaire selon la revendication 15, **caractérisé en ce que** la tête de commande (52) est agencée entre une paroi tubulaire (30) entourant la tête d'entraînement (26) et une paroi périphérique (31).

17. Appareil électroménager de préparation culinaire selon la revendication 16, **caractérisé en ce qu'**une butée (33) est agencée entre la paroi tubulaire (30) et la paroi périphérique (31).

18. Appareil électroménager de préparation culinaire selon l'une des revendications 14 à 17, **caractérisé en ce que** l'organe de détection (40) comporte un corps (46) formant une butée d'arrêt (47) pour l'organe de protection (50) lorsque l'organe de détection (40) occupe la position de repos.

## Claims

1. Food preparation accessory provided to be used with a motor housing (1; 101) including a drive shaft (3; 103), said food preparation accessory including a working container (11; 111), a rotating tool (12; 112) provided to rotate in the working container (11; 111), and a cover (13; 13'; 13"; 13"'; 113) including a detection organ (40; 40'; 40''; 40''') that is mobile between a rest position occupied in the absence of the working container (11; 111) and an active position when the cover (13; 13'; 13"; 13"'; 113) is in place on the working container (11; 111), and a protective organ (50; 50'; 50"; 50"') that is mobile between a rest position wherein the rotating tool (12; 112) cannot be driven and an active position wherein the rotating tool (12; 112) can be driven, the detection organ (40; 40'; 40''; 40''') in rest position contributing to the maintaining of the protective organ (50; 50'; 50''; 50''') in rest position, **characterised in that** the detection organ (40; 40'; 40''; 40"') and the protective organ (50; 50'; 50''; are housed at least partially in the cover (13; 13'; 13''; 13"'; 113).

2. Food preparation accessory according to claim 1, **characterised in that** the cover (13; 13'; 13''; 13'''; 113) forms a hollow body (20).

3. Food preparation accessory according to one of claims 1 or 2, **characterised in that** the cover (13) comprises a protective wall (19) forming a lateral protection for a detection head (45) of the detection organ (40).

4. Food preparation accessory according to one of claims 1 to 3, **characterised in that** the cover (13) comprises at least one lateral lug (14) provided to be engaged in an interior groove (15) of the working container (11).

5. Food preparation accessory according to claim 4, **characterised in that** the interior groove (15) has an upper opening (16) and a lateral notch (17).

6. Food preparation accessory according to one of claims 1 to 5, **characterised in that** the detection organ (40) is mounted such as to be able to rotate against a return means (41).

7. Food preparation accessory according to one of claims 1 to 6, **characterised in that** the protective organ (50) is mounted such as to be able to rotate against another return means (51).

8. Food preparation accessory according to one of claims 1 to 7, **characterised in that** the cover (13; 13'; 13''; 13"'; 113) comprises a mechanism of transmission (25; 25'; 25''; 25"'; 125) comprising a drive head (26; 126) provided to cooperate with a drive shaft (3; 103) of said motor housing (1; 101) and a drive output (27; 27'; 27''; 27'''; 127) provided to cooperate with the rotating tool (12; 112).

9. Food preparation accessory according to claim 8, **characterised in that** the mechanism of transmission (25) comprises a reducer (28) arranged between the drive head (26) and the drive output (27).

10. Food preparation accessory according to one of claims 1 to 9, **characterised in that** the protective organ (50') forms a flap (60) able to seal at least partially an opening (61) of the cover (13') provided for the introduction of the rotating tool (12) or of the drive shaft (3) when the detection organ (40') reaches the active position.

11. Food preparation accessory according to one of claims 8 or 9, **characterised in that** the protective organ (50 ") is able to displace a transmission element (70) outside of the mechanism of transmission (25") when the detection organ (40'') occupies the rest position.

12. Food preparation accessory according to one of claims 8 or 9, **characterised in that** the protective organ (50''') is able to block the rotation of a transmission element (80) of the mechanism of transmission (25"') when the detection organ (40''') occupies the rest position.

13. Domestic appliance for food preparation comprising a motor housing (1; 101) including a drive shaft (3; 103), and a food preparation accessory (10; 110) including a working container (11; 111), a rotating tool (12) provided to turn in the working container (11), and a cover (13) including a detection organ (40; 40'; 40''; 40''') that is mobile between a rest position in the absence of the working container (11; 111) and an active position when the cover (13; 13'; 13''; 13"'; 113) is in place on the working container (11; 111), and a protective organ (50; 50'; 50''; 50''') that is mobile between a rest position wherein the rotating tool (12; 112) cannot be driven and an active position wherein the rotating tool (12; 112) can be driven, the detection organ (40; 40'; 40''; 40''') in rest position contributing to the maintaining of the protective organ (50; 50'; 50''; 50''') in rest position, **characterised in that** the food preparation accessory is a food preparation accessory according to one of claims 1 to 12.

14. Domestic appliance for food preparation according to claim 13, **characterised in that** the cover (13) comprises a mechanism of transmission (25) comprising a drive head (26) provided to cooperate with the drive shaft (3) and a drive output (27) provided to cooperate with the rotating tool (12) and **in that** the protective organ (50) in rest position occupies an output position provided to prevent the coupling of the drive shaft (3) with the drive head (26).

15. Domestic appliance for food preparation according to claim 14, **characterised in that** the protective organ (50) has a control head (52) provided to cooperate with the housing (1).

16. Domestic appliance for food preparation according to claim 15, **characterised in that** the control head (52) is arranged between a tubular wall (30) surrounding the drive head (26) and a peripheral wall (31).

17. Domestic appliance for food preparation according to claim 16, **characterised in that** a stop (33) is arranged between the tubular wall (30) and the peripheral wall (31).

18. Domestic appliance for food preparation according to one of claims 14 to 17, **characterised in that** the detection organ (40) comprises a body (46) forming a bump stop (47) for the protective organ (50) when the detection organ (40) occupies the rest position.

## Patentansprüche

1. Zubehör für kulinarische Zubereitungen, das dafür vorgesehen ist, mit einem Motorgehäuse (1; 101) verwendet zu werden, das eine Antriebsachse (3; 103) umfasst, wobei das Zubehör für kulinarische Zubereitungen einen Arbeitsbehälter (11; 111), ein Drehwerkzeug (12, 112), das dafür vorgesehen ist, sich im Arbeitsbehälter (11, 111) zu drehen, und einen Deckel (13; 13'; 13"; 13"', 113) umfasst, der ein Detektorglied (40; 40'; 40"; 40'''), das zwischen einer Ruheposition, die bei fehlendem Arbeitsbehälter (11; 111) eingenommen wird, und einer Position, die aktiv ist, sobald sich der Deckel (13; 13'; 13''; 13"', 113) auf dem Arbeitsbehälter (11; 111) befindet, beweglich ist, und ein Schutzglied (50; 50'; 50''; 50''') umfasst, das zwischen einer Ruheposition, in der das Drehwerkzeug (12; 112) nicht angetrieben werden kann, und einer Aktivposition, in der das Drehwerkzeug (12; 112) angetrieben werden kann, beweglich ist, wobei das Detektorglied (40; 40'; 40''; 40''') in Ruheposition zum Halten den Schutzglieds (50; 50'; 50"; 50''') in Ruheposition beiträgt, **dadurch gekennzeichnet, dass** das Detektorglied (40; 40'; 40"; 40"') und das Schutzglied (50; 50'; 50''; 50"') zumindest teilweise im Deckel (13; 13'; 13"; 13''', 113) untergebracht sind.

2. Zubehör für kulinarische Zubereitungen nach Anspruch 1, **dadurch gekennzeichnet, dass** der Deckel (13; 13'; 13''; 13"', 113) einen Hohlkörper (20) bildet.

3. Zubehör für kulinarische Zubereitungen nach einem der Ansprüche 1 oder 2, **dadurch gekennzeichnet, dass** der Deckel (13) eine Schutzwand (19) umfasst, die einen seitlichen Schutz für einen Detektorkopf (45) des Detektorglieds (40) bildet.

4. Zubehör für kulinarische Zubereitungen nach einem der Ansprüche 1 bis 3, **dadurch gekennzeichnet, dass** der Deckel (13) mindestens einen seitlichen Zapfen (14) umfasst, der dafür vorgesehen ist, in eine Innenrille (15) des Arbeitsbehälters (11) eingesetzt zu werden.

5. Zubehör für kulinarische Zubereitungen nach Anspruch 4, **dadurch gekennzeichnet, dass** die Innenrille (15) eine obere Öffnung (16) und eine seitliche Auskerbung (17) aufweist.

6. Zubehör für kulinarische Zubereitungen nach einem der Ansprüche 1 bis 5, **dadurch gekennzeichnet, dass** das Detektorglied (40) beweglich gegen ein Rückholmittel (41) befestigt ist.

7. Zubehör für kulinarische Zubereitungen nach einem der Ansprüche 1 bis 6, **dadurch gekennzeichnet, dass** das Schutzglied (50) beweglich gegen ein weiteres Rückholmittel (51) befestigt ist.

8. Zubehör für kulinarische Zubereitungen nach einem der Ansprüche 1 bis 7, **dadurch gekennzeichnet, dass** der Deckel (13; 13'; 13"; 13"', 113) einen Übertragungsmechanismus (25; 25'; 25"; 25"'; 125) umfasst, der einen Antriebskopf (26; 126), der dafür vorgesehen ist, mit einer Antriebsachse (3; 103) des Motorgehäuses (1; 101) zusammenzuwirken, und einen Antriebsausgang (27; 27'; 27''; 27"'; 127) umfasst, der dafür vorgesehen ist, mit dem Drehwerkzeug (12; 112) zusammenzuwirken.

9. Zubehör für kulinarische Zubereitungen nach Anspruch 8, **dadurch gekennzeichnet, dass** der Übertragungsmechanismus (25) ein Getriebe (28) umfasst, das zwischen dem Antriebskopf (26) und dem Antriebsausgang (27) angeordnet ist.

10. Zubehör für kulinarische Zubereitungen nach einem der Ansprüche 1 bis 9, **dadurch gekennzeichnet, dass** das Schutzglied (50') eine Klappe (60) bildet, die in der Lage ist, zumindest teilweise eine Öffnung (61) des Deckels (13') zu verschließen, die für die Einführung des Arbeitswerkzeuges (12) oder der Antriebsachse (3) vorgesehen ist, wenn das Detektorglied (40') die Aktivposition erreicht.

11. Zubehör für kulinarische Zubereitungen nach einem der Ansprüche 8 oder 9, **dadurch gekennzeichnet, dass** das Schutzglied (50 ") imstande ist, ein Übertragungselement (70) aus dem Übertragungsmechanismus (25 ") hinauszuversetzen, wenn das Detektorglied (40") die Ruheposition einnimmt.

12. Zubehör für kulinarische Zubereitungen nach einem der Ansprüche 8 oder 9, **dadurch gekennzeichnet, dass** das Schutzglied (50"') imstande ist, die Drehung eines Übertragungselements (80) des Übertragungsmechanismus (25 " ') zu blockieren, wenn das Detektorglied (40"') die Ruheposition einnimmt;

13. Elektrohaushaltsgerät für kulinarische Zubereitungen, umfassend ein Motorgehäuse (1; 101), das eine Antriebsachse (3; 103) umfasst, und ein Zubehör für kulinarische Zubereitungen (10; 110), das einen Arbeitsbehälter (11; 111), ein Drehwerkzeug (12), das dafür vorgesehen ist, sich im Arbeitsbehälter (11) zu drehen, und einen Deckel (13) umfasst, der ein Detektorglied (40; 40'; 40"; 40"'), das zwischen einer Ruheposition, die bei fehlendem Arbeitsbehälter (11; 111) eingenommen wird, und einer Position, die aktiv ist, sobald sich der Deckel (13; 13'; 13''; 13''', 113) auf dem Arbeitsbehälter (11; 111) befindet, beweglich ist, und ein Schutzglied (50; 50'; 50''; 50"') umfasst, das zwischen einer Ruheposition, in der das Drehwerkzeug (12; 112) nicht angetrieben werden kann, und einer Aktivposition, in der das Drehwerkzeug (12; 112) angetrieben werden kann, beweglich ist, wobei das Detektorglied (40; 40'; 40"; 40''') in Ruheposition zum Halten den Schutzglieds (50; 50'; 50"; 50"') in Ruheposition beiträgt, **dadurch gekennzeichnet, dass** das Zubehör für kulinarische Zubereitungen einem der Ansprüche 1 bis 12 entspricht.

14. Elektrohaushaltsgerät für kulinarische Zubereitungen nach Anspruch 13, **dadurch gekennzeichnet, dass** der Deckel (13) einen Übertragungsmechanismus (25) umfasst, der einen Antriebskopf (26), der dafür vorgesehen ist, mit der Antriebsachse (3) zusammenzuwirken, und einen Antriebsausgang (27) umfasst, der dafür vorgesehen ist, mit dem Drehwerkzeug (12) zusammenzuwirken, und **dadurch**, dass das Schutzglied (50) in Ruheposition eine ausgefahrene Position einnimmt, um die Kopplung der Antriebsachse (3) mit dem Antriebskopf (26) zu verhindern.

15. Elektrohaushaltsgerät für kulinarische Zubereitungen nach Anspruch 14, **dadurch gekennzeichnet, dass** das Schutzglied (50) einen Schaltkopf (52) aufweist, der dafür vorgesehen ist, mit dem Gehäuse (1) zusammenzuwirken.

16. Elektrohaushaltsgerät für kulinarische Zubereitungen nach Anspruch 15, **dadurch gekennzeichnet, dass** der Schaltkopf (52) zwischen einer röhrenförmigen Wand (30), die den Antriebskopf (26) umgibt, und einer umlaufenden Wand (31) angeordnet ist.

17. Elektrohaushaltsgerät für kulinarische Zubereitungen nach Anspruch 16, **dadurch gekennzeichnet, dass** ein Anschlag (33) zwischen der röhrenförmigen Wand (30) und der umlaufenden Wand (31) angeordnet ist.

18. Elektrohaushaltsgerät für kulinarische Zubereitungen nach einem der Ansprüche 14 bis 17, **dadurch gekennzeichnet, dass** das Detektorglied (40) einen Körper (46) umfasst, der für das Schutzglied (50) einen Stoppanschlag (47) bildet, wenn das Detektorglied (40) die Ruheposition einnimmt.
